# FASCICULE DE BREVET EUROPEEN

(11) **EP 1 200 530 B1**
(45) Date de publication et mention de la délivrance du brevet: **08.10.2003**
(21) Numéro de dépôt: 00958642.1
(22) Date de dépôt: 28.07.2000
(51) Int. Cl.: C09D 11/00

(54) **COMPOSITION D'ENCRE POUR L'IMPRESSION PAR JET D'ENCRE**
TINTENZUSAMMENSETZUNG FÜR TINTENSTRAHLDRUCKER
INK COMPOSITION FOR INK JET PRINTING

(30) Priorité: 30.07.1999 FR 9909946
(43) Date de publication de la demande: 02.05.2002
(73) Titulaire: IMAJE S.A., 26501 Bourg-les-Valence (FR)
(72) Inventeur: MILLOT, Vincent, F-69007 Lyon (FR); DE SAINT ROMAIN, Pierre, F-26000 Valence (FR)
(74) Mandataire: Audier, Philippe André
(86) Numéro de dépôt international: FR0002175
(87) Numéro de publication internationale: WO01009255

(56) Documents cités:
- DATABASE WPI Section Ch, Week 199014 Derwent Publications Ltd., London, GB; Class A14, AN 1990-106228 XP002134906 & SU 1 509 388 A (UKR PRINTING IND RE), 23 septembre 1989 (1989-09-23)
- DATABASE WPI Section Ch, Week 199503 Derwent Publications Ltd., London, GB; Class A97, AN 1995-019457 XP002134907 & JP 06 306316 A (CITIZEN WATCH CO LTD), 1 novembre 1994 (1994-11-01) cité dans la demande

## Description

L'invention concerne une composition d'encre pour le marquage de supports et d'objets de toutes sortes dont les propriétés sont particulièrement bien adaptées au marquage ou à l'impression par jet de liquide d'une très grande variété de supports.

L'impression par jet d'encre est une technique bien connue, qui permet l'impression, le marquage, ou la décoration de toutes sortes d'objets, à grande vitesse, et sans contact de ces objets avec le dispositif d'impression, de messages variables à volonté, tels que codes barres, dates limites de vente, etc. et ce, même sur des supports non plans.

Les systèmes d'impression par jet d'encre se divisent en deux grands types : « goutte à la demande » (Drop on demand, DOD) ou « jet continu » (CJ).

Nous nous intéresserons plus particulièrement à cette dernière technique, plus précisément à la technique du jet continu dévié.

La projection par jet continu dévié consiste à envoyer sous pression de l'encre dans une cavité contenant un cristal piézo-électrique, d'où l'encre s'échappe par un orifice (buse) sous la forme d'un jet. Le cristal piézo-électrique, vibrant à une fréquence déterminée, provoque des perturbations de pression dans le jet d'encre, qui oscille et se brise progressivement en gouttelettes sphériques. Une électrode, placée sur le trajet du jet, là où il se brise, permet de donner à ces gouttes une charge électrostatique, si l'encre est conductrice. Les gouttes ainsi chargées sont défléchies dans un champ électrique et permettent l'impression.

Ce type de projection d'encre par jet assure un marquage sans contact à grande vitesse de défilement sur des objets non nécessairement plans et avec la possibilité de changer de message à volonté.

Les compositions d'encre, aptes à la projection par jet continu dévié, doivent satisfaire un certain nombre de critères inhérents à cette technique, relatifs, entre autres, à la viscosité, la conductivité électrique, la solubilité dans un solvant pour le nettoyage, la compatibilité des ingrédients, le mouillage correct des supports à marquer, etc.

De plus, ces encres doivent sécher rapidement, être capables de passer par la buse sans la boucher, avec une grande stabilité d'orientation du jet tout en permettant un nettoyage facile de la tête d'impression.

Les ingrédients qui composent les encres actuelles, pour le jet d'encre de type jet continu dévié, sont des produits organiques ou minéraux, des matières colorantes, telles que des colorants ou pigments, résines ou liants, dans un ou des solvant(s) plus ou moins volatil(s) ou dans l'eau, éventuellement un ou des sel(s) de conductivité, ainsi que des additifs divers.

Le ou les sel(s) de conductivité éventuel(s) apporte(nt) à l'encre la conductivité nécessaire à la déviation électrostatique.

Les additifs comprennent les surfactants qui modifient le pouvoir mouillant ou pénétrant de l'encre, en particulier ceux qui modifient ou régulent la tension superficielle statique ou dynamique, tels que le Fluorad® FC 430 de la Société 3M®, les agents qui inhibent la corrosion induite par les sels mentionnés plus haut, ou encore les additifs qui protègent l'encre contre les proliférations de bactéries et d'autres micro-organismes : il s'agit de biocides, bactéricides, fongicides et autres, particulièrement utiles dans les encres contenant de l'eau, les tampons régulateurs de pH, les agents antimousse.

Les matières colorantes sont appelées « colorants ou pigments », selon qu'elles sont respectivement solubles ou insolubles dans le solvant utilisé.

Les pigments, par nature insolubles, sont donc dispersés et peuvent être opaques ou non. Ils apportent à l'encre sa couleur, son opacité, ou des propriétés optiques particulières, telles que la fluorescence (cf. brevets ou demandes de brevets US-A-4 153 593, US-A-4 756 758, US-A-4 880 465, EP-A-0 289 141, US-A-5 395 432, GB-A-2 298 713). Dans certains cas, les colorants apportent eux aussi suffisamment de conductivité à l'encre pour qu'il n'y ait pas besoin d'ajouter un sel de conductivité. Les colorants connus sous la dénomination C. I. Solvent Black 27, 29, 35 et 45 sont dans ce cas.

Le ou les liant(s) ou résine(s) est(sont) pour la plupart un(des) composé(s) solide(s) et polymérique(s) et leur choix est dicté par leur solubilité dans les solvants sélectionnés et par leur compatibilité avec les colorants et les autres additifs, mais aussi et surtout en fonction des propriétés qu'ils apportent au film d'encre, une fois sec. Leur fonction première est d'apporter à l'encre l'adhérence sur le maximum de supports ou sur des supports spécifiques, par exemple non poreux. Ils permettent aussi de donner à l'encre la viscosité adéquate pour la formation des gouttes à partir du jet et ils apportent à l'encre, ou plutôt au marquage obtenu, l'essentiel de ses propriétés de résistance aux agressions physiques et/ou chimiques.

Le solvant de ces encres est constitué le plus fréquemment d'un mélange comprenant, d'une part, une quantité majoritaire de solvants volatils et peu visqueux, afin de permettre le séchage très rapide des marquages et d'ajuster la viscosité à la valeur souhaitée, par exemple de 2 à 10 mPa.s et, d'autre part, des solvants plus visqueux et moins volatils à séchage plus lent, en une quantité moindre, pour éviter le séchage de l'encre dans la buse lors des phases d'arrêt de l'appareil d'impression.

Les solvants volatils utilisés le plus souvent sont les alcools, les cétones ou les esters de bas poids moléculaire, comme cela est indiqué dans les brevets US-A-4 567 213, US-A-5 637 139, parmi les solvants on peut citer essentiellement le méthanol, l'éthanol, les 1- et 2-propanol, l'acétone, la méthyl éthyl cétone (« MEK »), la méthyl-isobutyl cétone, l'acétate d'éthyle, et le tétrahydrofuranne.

Le brevet US-A-4 210 566 présente une encre majoritairement à base d'acétate de n-propyle.

Le tétrahydrofuranne est cité dans le brevet US-A-4 155 767 comme constituant essentiel du solvant d'une encre pour l'impression par jet d'encre (40 à 85 %).

Le document US-A-4 166 044 décrit une encre sans liant, dans laquelle le solvant comprend de l'eau (10 à 35 %), un alcool (6 à 25 %) et un composé organique choisi, par exemple, de manière générale, parmi les éthers cycliques. Cette encre présente tous les inconvénients liés à la présence d'eau.

Enfin, le document JP-A-63 06316 décrit une composition d'encre pour jet d'encre dont le solvant est de l'eau mélangée à un autre solvant, choisi parmi 14 autres composés dont le 1,3-dioxolanne.

Les solvants moins volatils ayant une fonction de retardateur de séchage sont le plus souvent les cétones, telles que la cyclohexanone, les éthers de glycol, cités dans les documents US-A-4 024 096 et US-A-4 567 213, les acétals, tels que le tétrahydrofuranne ou le dioxanne, mentionnés dans le document US-A-4 155 767, le diméthyl formamide ou le diméthylsulfoxyde (US-A-4 155 895), les lactones (EP-A-0 034 881), la N-méthyl pyrrolidone (EP-A-0 735 120), les glycols (WO-A-96 23 844), et même des hydrocarbures aliphatiques ayant en plus une fonction de pénétrant de films d'huile (US-A-4 166 044), ou encore l'eau, seule ou en combinaison avec d'autres solvants, cités plus haut, on se référera, à ce propos, aux documents US-A-4 153 593, GB-A-2 277 094 et FR-A-2 460 982.

De manière générale, les solvants principaux ou majoritaires des encres pour la projection par jet continu dévié doivent répondre à un certain nombre de critères, en particulier :
- leur volatilité doit être suffisante pour que l'encre sèche rapidement sur le support à marquer, mais pas trop grande, afin de ne pas s'évaporer trop vite dans l'imprimante ;
- leur pouvoir solvant, vis-à-vis des liants de l'encre, des colorants ou des dispersions pigmentaires et vis-à-vis des supports à imprimer, doit permettre de conférer à l'encre une bonne adhérence ;
- ils doivent avoir la capacité de maintenir dissociées les espèces ioniques (sels) qui confèrent à l'encre sa conductivité électrique ;
- leur effet sur la santé des personnes, à savoir leurs toxicité, nocivité, caractère irritant et inflammabilité, doivent être réduits ;
- ils doivent permettre de maintenir stérile une encre éventuellement destinée à être ingérée.

Aucun des solvants, dits principaux ou majoritaires, actuellement mis en oeuvre couramment dans les encres pour impression par jet continu, ne remplit simultanément l'ensemble des critères mentionnés ci-dessus.

Ainsi, le méthanol est toxique et présente un pouvoir solvant médiocre ; l'éthanol n'est pas suffisamment volatil et son pouvoir solvant n'est pas assez important ; l'acétate d'éthyle et les autres acétates ont une odeur extrêmement forte, ce qui est un défaut rédhibitoire dans de nombreuses applications ; l'acétone est trop volatile avec un point éclair très bas (-18°C) ; la méthyl-éthyl-cétone (« MEK ») a une solubilité adéquate et présente un bon pouvoir solvant, mais elle est irritante, odorante et elle est très inflammable avec un point éclair de -9°C, de plus, elle est même proscrite par les réglementations de certains pays ; le tétrahydrofuranne (THF) a une volatilité plus grande que celle de la méthyl-éthyl-cétone, puisque son point d'ébullition est de 10°C inférieur à celui de la méthyl-éthyl-cétone, son point éclair de -17°C est presque aussi bas que celui de l'acétone, il peut former des peroxydes explosifs, il est irritant comme la méthyl-éthyl-cétone et des encres en contenant plus de 25 % doivent être étiquetées comme irritantes.

Il existe donc un besoin non satisfait pour une composition d'encre convenant, en particulier, pour l'impression par jet continu dévié, dont le solvant remplit simultanément, entre autres, l'ensemble des critères mentionnés ci-dessus, en conséquence de quoi, sont communiqués à l'encre les propriétés souhaitées, tandis que sont satisfaites, les exigences, en particulier, réglementaires en matière de toxicité, d'inflammabilité et de protection de l'environnement.

Il serait intéressant de disposer d'une encre qui présenterait tous les avantages de la méthyl-cétone, sans en subir les inconvénients.

Il existe encore un besoin pour une encre convenant en particulier pour l'impression par jet d'encre qui permette le marquage rapide de tous types d'objets aux caractéristiques de surfaces différentes, aussi bien poreux que non poreux.

L'encre doit, en outre, donner un marquage qui présente une bonne adhérence et une bonne résistance aux agressions chimiques et, de manière générale, présenter toutes les propriétés habituellement requises des encres pour les imprimantes à jet d'encre, notamment pour les imprimantes utilisant la technique du jet continu : viscosité, résistivité, etc.

L'encre doit, de plus, pour permettre le marquage à grande vitesse, avoir une vitesse de séchage aussi élevée que possible.

Le but de l'invention est donc de fournir une composition d'encre convenant, en particulier, pour l'impression par jet continu dévié, qui répond, entre autres, à l'ensemble des besoins indiqués plus haut, qui satisfait aux critères et exigences mentionnés ci-dessus, et qui ne présente pas les inconvénients, limitations, défauts et désavantages des compositions d'encre de l'art antérieur, et qui surmonte les problèmes des compositions de l'art antérieur liés, en particulier, à la nature du solvant qu'elles contiennent.

Ce but et d'autres encore sont atteints, conformément à l'invention, par une composition d'encre comprenant :
- un liant ;
- un ou plusieurs colorant(s) et/ou pigment(s) ; et
- un solvant,
dans laquelle ledit solvant comprend au moins 10 % en poids - par rapport au poids total de l'encre - de 1,3-dioxolanne, au moins 5 % en poids d'un ou plusieurs autre(s) composé(s) organique(s) susceptible(s) de dissocier les espèces ionisables se trouvant dans l'encre et moins de 5 % d'eau.

Afin de lever toute ambiguïté et du fait qu'il semble que le nom de dioxolanne soit donné communément à deux produits distincts, le 1,3-dioxolanne dont il est question ici est de formule brute C₃H₆O₂ et a pour numéro de CAS [646-06-0].

Sa formule développée est la suivante :

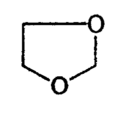

L'invention est basée sur la constatation surprenante que le 1,3-dioxolanne permet la formulation d'une encre, convenant particulièrement à la projection par jet continu et que cela était possible sans apport d'eau à la formulation. En effet, les problèmes qui se posent dans les compositions d'encre, pour l'impression par jet d'encre continu dévié, sont extrêmement spécifiques, si bien que mêmes des solutions analogues, qui auraient pu être adoptées dans des compositions d'encre utilisées pour d'autres techniques, ne peuvent être transposées, de manière immédiate et directe, aux compositions d'encre pour l'impression par jet continu.

A fortiori, l'utilisation éventuelle du dioxolanne dans des compositions encore plus éloignées, telles que des compositions de peinture - forcément opaques au contraire des compositions d'encre - ne permettraient absolument pas de conclure que le dioxolanne peut convenir à une utilisation très spécifique dans une encre et, encore plus spécifiquement, dans une encre pour l'impression par jet continu dévié.

Il ne découlait pas de manière évidente des compositions connues que le choix du 1,3-dioxolanne - parmi la multiplicité des solvants organiques existants - pouvait conduire à une encre satisfaisant à tous les critères, exigences et besoins mentionnés plus haut, notamment en relation avec la nature du solvant. L'utilisation du 1,3-dioxolanne, dans de telles compositions d'encre, n'est ni décrite, ni suggérée dans l'art antérieur, où la seule composition d'encre pour jet d'encre citée pouvant éventuellement contenir du 1,3-dioxolanne, comprend un solvant ou véhicule essentiellement constitué d'eau et de 1,3-dioxolanne en quantités mineures et seulement de manière facultative. Or, comme on l'a mentionné plus haut, cette composition a besoin d'eau en quantités notables pour avoir les propriétés décrites et être correctement dissoute.

Au contraire, la composition d'encre selon l'invention contient une très faible quantité d'eau inférieure à 5 % et, de préférence, inférieure à 1 %.

La composition d'encre selon l'invention peut même être considérée comme étant exempte d'eau. En fait, l'eau présente n'est que l'eau apportée se trouvant à titre d'impureté dans les divers composants de l'encre. Plus le degré de pureté des composants choisis sera grand, plus la teneur en eau sera faible.

La faible teneur ou absence d'eau dans la composition d'encre selon l'invention favorise l'impression à grande vitesse pour laquelle une vitesse d'évaporation très élevée est nécessaire.

Les critères et exigences définies quant aux propriétés d'un solvant pour une composition d'encre pour la projection par jet continu sont remplis par le 1,3-dioxolanne, ainsi :
- son point d'ébullition est de 75°C, ce qui est proche des points d'ébullition de l'éthanol et de la méthyl-éthyl-cétone ;
- sa volatilité est de 3,4 (celle de l'acétate de butyle étant égale à 1), ce qui est très voisin de celle de la méthyl-éthyl-cétone qui est de 3,7.

Sa capacité à dissoudre la plupart des polymères est aussi très intéressante pour obtenir une bonne adhérence sur le plus grand nombre de supports à marquer.
- Il dissout complètement le polystyrène, le poly-méthacrylate de méthyle, le poly-sulfone, le poly-carbonate, les caoutchoucs de types élastomères thermoplastiques Styrène-Butadiène-Styrène (SBS).
- Il ramollit très fortement le poly(oxyde de phénylène), le poly(chlorure de vinyle), certains polyuréthane, les copolymères Acrylonitrile-Butadiène-Styrène (ABS).
- Il gonfle les élastomères d'éthylène-propylène-diènemonomère (EPDM), le Polyéthylène-Téréphtalate (PET), les copolymères d'éthylène-acétate de vinyle.
- Il dissout aussi un grand nombre de résines ou polymères servant de liant de l'encre et assurant l'adhérence sur les supports à marquer.
- Sa capacité à dissoudre les colorants, en particulier de type C. I. solvent dyes, est aussi bonne que celle de la méthyléthylcétone.

Le 1,3-dioxolanne est un produit inflammable de point éclair égal à 2°C, mais qui n'est ni nocif, ni irritant. Son odeur n'est ni forte, ni désagréable.

Le 1,3-dioxolanne est donc supérieur aux solvants principaux, le plus souvent utilisés jusqu'alors dans les compositions d'encre pour la projection par jet continu.

Le 1,3-dioxolanne est en effet plus intéressant que :
- le méthanol qui est toxique et dont le pouvoir solvant est bien inférieur ;
- l'éthanol qui est moins volatil et de pouvoir solvant inférieur ;
- l'acétate d'éthyle, ou les autres acétates, dont l'odeur est très forte ;
- l'acétone qui est trop volatile avec un point éclair très bas (-18°C) ;
- la méthyl-éthyl-cétone, qui est irritante, a un point éclair inférieur (-9°C).

Plus précisément, vis-à-vis de la méthyl-éthyl-cétone (ou « MEK »), le 1,3-dioxolanne est moins odorant, moins nocif et irritant, presque aussi volatil et avec un pouvoir solvant très voisin.

Grâce au 1,3-dioxolanne et selon l'invention, il est possible, de manière surprenante, de formuler des encres réellement sans méthyl-éthyl-cétone, et qui sont donc exemptes des inconvénients inhérents à celles-ci, mais qui présentent cependant presque tous les avantages de la méthyl-éthyl-cétone.

En particulier, les encres selon l'invention présentent une grande stabilité, due au 1,3-dioxolanne.

La composition d'encre selon l'invention et plus précisément le solvant inclus dans celle-ci contient, en outre, au moins 5 % en poids par rapport au poids total de l'encre, d'un autre composé organique - c'est-à-dire un composé organique différent du 1,3-dioxolanne - susceptible de dissocier les espèces ionisables, en particulier les sels et notamment les sels de conductivité, qui sont la plupart du temps nécessaires dans les encres pour l'impression par jet d'encre continu dévié.

En effet, le pouvoir dissociant du 1,3-dioxolanne n'est pas suffisant pour qu'il soit utilisé comme seul solvant, c'est la raison pour laquelle il doit être combiné selon l'invention à un second solvant pour obtenir la conductivité nécessaire, en particulier pour son utilisation dans l'impression par jet continu.

Une telle combinaison sans nuire en aucune manière aux propriétés avantageuses du 1,3-dioxolanne, mentionnées plus haut, apporté le pouvoir dissociant nécessaire à l'usage préféré qui est fait de l'encre dans l'impression par jet d'encre continu dévié et permet notamment de dissocier les sels de conductivité qui sont la plupart du temps nécessaires dans les encres pour l'impression par jet d'encre continu dévié.

En d'autres termes, on peut dire que le dioxolanne sans eau et combiné à un solvant dissociant pour les ions, apporte à la fois l'adhérence sur les matériaux plastiques ou caoutchouteux, la « projetabilité » par jet continu dévié, et la vitesse d'évaporation, sans les inconvénients associés à la présence d'eau, à savoir une moins bonne formation du film d'encre.

De préférence, la composition selon l'invention comprend de 10 à 85 % en poids de 1,3-dioxolanne, de préférence encore de 35 à 80 % en poids. Plus la composition est riche en 1,3-dioxolanne, plus sont mis à profit les avantages qu'il procure.

De préférence, la composition selon l'invention comprend de 5 à 50 % en poids du ou des autre(s) composé(s) organique(s), de préférence encore de 10 à 40 % en poids du ou des autre(s) composé(s) organique(s).

Le ou lesdits autre(s) composé(s) organique(s) faisant partie du solvant et autre(s) que le dioxolanne est(sont) choisi(s), par exemple, parmi les alcools, en particulier, les alcools de bas poids moléculaire, par exemple, les alcools aliphatiques, les cétones, les éthers d'alkylènes glycol et les esters de ceux-ci, le diméthyl formamide, la N-méthyl pyrrolidone, et tous les composés connus de l'homme du métier pour leur aptitude à dissocier les espèces ionisables ou dissociables en ions, telles que les sels ; et leurs mélanges : par composés possédant une telle aptitude à dissocier ces espèces, on entend généralement des composés liquides produisant des solutions conductrices d'électricité, lorsque lesdites espèces s'y trouvent.

De préférence, le ou lesdits autre(s) composé(s) organique(s) faisant partie du solvant est(sont) des solvants organiques dont la volatilité est inférieure à celle du 1,3-dioxolanne.

De préférence, ce ou ces composé(s) possède(nt), en outre, la propriété de dissoudre les autres ingrédients de l'encre, notamment le liant, les matières colorantes, les additifs, etc., et/ou de retarder l'évaporation de l'encre, par rapport à une encre qui ne contiendrait que du 1,3-dioxolanne en tant que solvant.

Les alcools seront, de préférence, choisis parmi les alcools aliphatiques linéaires ou ramifiés de 1 à 5 atomes de carbone, tels que le méthanol, l'éthanol, le propanol-1, le propanol-2, le n-butanol, le butanol-2, le tert-butanol, etc.

Les cétones seront, de préférence, choisies parmi les cétones de 3 à 10 atomes de carbone, telles que l'acétone, la butanone (méthyl-éthyl-cétone), la pentanone-2 (méthyl-propyl-cétone), et la méthyl-4 pentanone-2 (méthyl-isobutyl-cétone).

Les éthers d'alkylène glycol sont choisis parmi les éthers monoalkyliques (en C1 à C6) ou dialkylique (en C1 à C6) d'alkylène glycol comprenant 1 à 10 atomes de carbone dans la chaîne alkylène, de préférence il s'agit d'éthers d'éthylène ou de propylène glycol, tels que le méthoxy-propanol.

Les esters d'éthers de glycol sont choisis, de préférence, parmi les esters de ceux-ci avec les acides carboxyliques, aliphatiques saturés de 1 à 6 atomes de carbone, tels que l'acide formique, l'acide acétique, l'acide propionique, l'acide butyrique, l'acide valérique et l'acide caproïque.

On peut citer, par exemple, l'acétate de méthoxypropyle, l'acétate de butyldiglycol, etc..

Il a été constaté qu'un solvant comprenant la combinaison des solvants 1,3-dioxolanne et acétone donnait des encres à séchage particulièrement rapide.

La composition d'encre selon l'invention comprend également un liant comprenant un ou plusieurs polymère(s) et/ou résine(s).

Ces polymères et/ou résines sont choisis, de préférence, parmi les résines (méth)acryliques, vinyliques, cétoniques, phénoliques, cellulosiques, styréniques, époxy, les polyuréthanes, les styrène-acrylates et les combinaisons de deux ou plus de ceux-ci.

Des exemples de ces résines sont les suivants :

Pour les résines acryliques, méthacryliques et styrène-acrylates, les Joncryl® de la Société JOHNSON POLYMER, les Acryloid® de la Société ROHM & HAAS, les SMA® de la Société ATOCHEM ou les Neocryl® de ZENECA.

Pour les résines vinyliques, les Hostaflex® de la Société VIANOVA, les Vinylites de UNION CARBIDE ou les Vinnol® de WACKER.

Pour les résines cétoniques, les produits proposés par les Sociétés HULS et BASF, tels que les résines dites AP et SK de HULS et les résines LAROPAL® de BASF.

Pour les résines phénoliques, les produits proposés par la Société VIANOVA sous la dénomination ALNOVOL®.

Parmi les résines cellulosiques, comme les nitrocelluloses, les éthylcelluloses, les acéto-propionates ou acétobutyrates de cellulose, on peut citer, par exemple, les produits proposés par les Sociétés HERCULES ou EASTMAN.

Parmi les résines époxy, on peut citer les Epikote® proposés par la Société SHELL ou les Araldite de CIBA.

Parmi les polyuréthanes, on peut citer les Surkopak® de la Société MITCHANOL.

La proportion de liant dans la composition d'encre selon l'invention est généralement de 0,1 à 30 % en poids, de préférence, de 3 à 20 % en poids.

La composition d'encre peut, en outre, comprendre un ou plusieurs plastifiant(s) (de la ou des résine(s) ou polymère(s) du liant) choisi(s), par exemple, parmi les plastifiants connus de l'homme du métier et choisis en fonction du liant utilisé comprenant un ou plusieurs polymère(s) et/ou résine(s), on peut citer, en tant que plastifiant, par exemple, les polyuréthanes thermoplastiques.

Le pouvoir solvant du dioxolanne permet d'incorporer facilement de tels composés plastifiants dans la composition de l'invention.

Le ou les plastifiant(s) est(sont) généralement présent(s) à raison de 0,1 à 20 % en poids.

Le ou les colorant(s) et/ou pigment(s) peut(vent) être choisi(s) parmi tous les colorants ou pigments convenant à l'usage recherché, connus de l'homme du métier, certains de ces pigments ou colorants ont déjà été cités plus haut.

On les choisira généralement parmi les colorants et pigments connus sous la dénomination de « C. I. Solvent Dyes » et « C. I. Pigments ». A titre d'exemple, des pigments et colorants les plus courants, on peut citer les C. I. Solvent Black 29, C. I. Solvent Black 7, C. I. Solvent Black 35, C. I. Solvent Blue 70, C. I. Solvent Red 124, les dispersions de Pigment Blue 60 ou de Pigment Blue 15.

La quantité de colorant et/ou de pigment est généralement de 0,1 à 20 % en poids, de préférence, de 3 à 10 %.

Grâce à la capacité du 1,3-dioxolanne de dissoudre le ou les colorant(s) en quantité plus importante que les solvants habituels, il est notamment possible, dans le cas d'un colorant fluorescent, d'obtenir des encres particulièrement fluorescentes, c'est-à-dire visibles sous un faible éclairement UV.

La composition selon l'invention peut, en outre, éventuellement, comprendre au moins un sel de conductivité.

En effet, lorsque l'encre doit être applicable par jet continu, elle doit avoir une conductivité électrique suffisante, de préférence, de l'ordre de 500 à 2 000 µs/cm, ou plus.

Les produits apportant à l'encre la conductivité nécessaire à la projection par jet continu sont des composés ionisables, tels que les sels, il est possible que les colorants (en effet, les pigments et solvants n'ont aucune chance d'apporter de la conductivité à ces encres), déjà présents dans l'encre, donnent suffisamment de conductivité à celle-ci pour qu'il n'y ait pas besoin d'ajouter de sel de conductivité proprement dit, ces colorants sont alors forcément des sels : c'est le cas des composés connus sous la dénomination « C. I. Solvent Black 27, 29, 35 et 45 », déjà cités.

Cependant, il sera souvent nécessaire d'inclure, dans la composition d'encre, un sel de conductivité différent des colorants et qui est généralement choisi parmi les sels de métaux alcalins, alcalino-terreux et d'ammoniums simples ou quaternaires, sous forme d'halogénures (chlorures, bromures, iodures, fluorures), de perchlorates, de nitrates, thiocyanates, formiates, acétates, sulfates, propionates, etc. Ces sels de conductivité seront donc présents, si nécessaire, dans la composition d'encre de manière à communiquer à l'encre la conductivité ci-dessus : de préférence, leur quantité est de 0,1 à 20 % en poids, de préférence, encore de 0,1 à 10 % en poids.

La composition selon l'invention peut, en outre, comprendre un ou plusieurs additifs choisis parmi les composés qui améliorent la solubilité de certains de ces composants, la qualité d'impression, l'adhérence, ou encore le contrôle du mouillage de l'encre sur différents supports.

Le ou les additif(s) pourra(ont) être choisi(s), par exemple, parmi les agents antimousse, les stabilisants chimiques, les stabilisants UV ; les agents tensio-actifs, tels que le Fluorad® FC 430, les agents stabilisant la corrosion par les sels, les bactéricides, les fongicides et biocides, les tampons régulateurs de pH, etc.

Le ou les additif(s) est(sont) utilisé(s) à des doses très faibles, en général inférieures ou égales à 5 % et parfois aussi faibles que 0,01 %, selon qu'il s'agisse des anti-mousse, des stabilisants ou des tensio-actifs.

L'invention a également pour objet un procédé de marquage d'objets, par exemple, poreux ou non poreux, par projection sur des objets ou des substrats d'une composition d'encre, telle qu'elle a été décrite ci-dessus. Le marquage peut notamment s'effectuer par la technique du jet continu dévié.

Ce substrat peut être en métal, par exemple, en aluminium, en acier (boîtes de boissons), en verre (bouteilles de verre), en bois, en céramique, en papier, en carton, en polymère synthétique (« plastique »), tels que PVC, PET, en polyoléfine, telles que polyéthylène (PB), polypropylène (PP), en « Plexiglas », ou en toute autre substance non poreuse ou poreuse. Il est à noter que du fait des propriétés du 1,3-dioxolanne de dissolution de nombreux substrats, l'adhérence des marquages obtenus selon l'invention, est excellente, même sur des substrats considérés comme difficiles, tels que le polyéthylène.

Les compositions d'encres suivantes, selon l'invention, ont été préparées en mélangeant les produits mentionnés dans le tableau I, dans les proportions indiquées, qui donne également la viscosité et la conductivité des encres obtenues.

**Tableau I**

| | EXEMPLES | | | | | |
|---|---|---|---|---|---|---|
| CONSTITUANTS (pourcentages en masse) | N° 1 | N° 2 | N° 3 | N°4 | N°5 | N°6 |
| 1-3 dioxolanne pur (> 99 %) | 40 | 46 | 34 | 45,5 | 80,7 | 60 |
| Ethanol 99 % | 38,9 | | 33,4 | 27,2 | | |
| Méthyl-éthyl-cétone | | 46,4 | | | | |
| Méthoxy-propyl-acétate | | | 10 | | | |
| Méthoocy-prooanol | | | | 9 | | |
| N-méthyl-pyrrolidone | | | | | 11,5 | |
| Acétone | | | | | | 25 |
| Propanol-2 | | | | | | 3 |
| Colorant fluorescent orange (1) | 10 | | | | | |
| Fluorescent brightener (2) | | 1,5 | | | | |
| Solvent Red 124 | | | 4,5 | | | |
| Solvent Black 7 | | | | 4,5 | | |
| Dispersion vinylique de Pigment blue 60 | | | | | 3 | |
| Solvent Black 29 | | | | | | 5 |
| Résine acrylique (3) | 8 | | | | | |
| Résine vinylique (4) | | 5 | | | 3 | |
| Résine phénolique (5) | | | 17 | | | |
| Résine cétonique (6) | | | | 11 | | |
| Nitrocellulose | | | | | | 6,9 |
| Polyuréthane thermoplastique | 2 | | | | | |
| Nitrate de lithium | 1 | | 1 | | 1,7 | |
| Thiocyanate de potassium | | 1 | | | | |
| Acétate d'ammonium | | | | 2,7 | | |
| Surfactant (7) | 0,1 | 0,1 | 0,1 | 0,1 | 0,1 | 0,1 |
| Viscosité (mPa.s) | 4,4 | 4,0 | 4,5 | 4,0 | 4,1 | 5,0 |
| Conductivité (µS/cm) | 960 | 800 | 855 | 700 | 800 | 850 |

(1) Solution solide de dérivés de rhodamine et de résine polyester.
(2) C. I. Fluorescent Brightener 184.
(3) Joncryl® 68 de Johnson Polymer.
(4) VMCH de Union Carbide.
(5) Résine phénolique de type novolaque de VIANOVA® (ALNOVOL®).
(6) Résine cétonique de HULS.
(7) Surfactant Fluorad® FC 430 de 3M®.

Tous les pourcentages sont des pourcentages en masse.

Selon l'invention, chacune des compositions d'encre du tableau I donne des films bien tendus et brillants, très adhérents sur une grande variété de supports. Elles ne contiennent pas plus de 1 % d'eau, seulement due à l'eau présente en tant qu'impureté inévitable, par exemple, dans les alcools ou le 1,3-dioxolanne.

Les encres ainsi préparées ont été testées dans des imprimantes à jet continu dévié, fabriquées par la Société IMAJE®, de type Jaime 1 000 Série 4 et permettent toutes d'obtenir des impressions d'excellente qualité.

### Exemple 1

L'encre produite est une encre fluorescente orange, utilisable principalement pour l'indexation postale.

Son adhérence est excellente sur toutes sortes de supports utilisés pour emballer les différentes sortes de courrier.

Le pouvoir solvant du dioxolanne permet l'incorporation d'une résine polyuréthane plastifiante.

### Exemple 2

Cette encre est une encre incolore et visible sous illumination UV, utilisable pour les marquages dits « de sécurité ». Elle est particulièrement fluorescente, c'est-à-dire visible sous un faible éclairement UV, grâce à la capacité du dioxolanne de dissoudre le colorant fluorescent en quantité plus importante.

### Exemple 3

Cette encre rouge est particulièrement adhérente, même sur des supports difficiles comme le polyéthylène.

### Exemple 4

Cette encre noire est très intéressante pour le marquage de codes barres, grâce à son absorption de la lumière rouge et infrarouge. Son excellente stabilité est obtenue grâce à la présence du dioxolanne.

### Exemple 5

Cette encre bleue est particulièrement adhérente sur les supports de type PVC.

### Exemple 6

Cette encre noire à usages multiples a un séchage particulièrement rapide, grâce à la combinaison des solvants acétone et dioxolanne.

A l'exception des encres des exemples 2 et 5, toutes ces encres ne sont pas soumises à un étiquetage autre que F = « facilement inflammable ». Les encres des exemples 2 à 5 contenant respectivement de la méthyléthylcétone ou de la N-méthylpyrrolidone devront être étiquetées Xi = irritant, d'après la législation européenne.

## Revendications

1. Composition d'encre comprenant :
- un liant ;
- un ou plusieurs colorant(s) et/ou pigment(s) ; et
- un solvant,
dans laquelle ledit solvant comprend au moins 10 % en poids - par rapport au poids total de l'encre - de 1,3-dioxolanne, au moins 5 % en poids d'un ou plusieurs autre(s) composé(s) organique(s) susceptible(s) de dissocier les espèces ionisables se trouvant dans l'encre et moins de 5 % d'eau.

2. Composition d'encre selon la revendication 1 comprenant de 10 à 85 % en poids de dioxolanne.

3. Composition selon l'une quelconque des revendications 1 et 2 comprenant de 5 à 50 % en poids dudit ou desdits(s) autre(s) composé(s) organique(s).

4. Composition d'encre selon l'une quelconque des revendications 1 à 3, dans laquelle le ou lesdits autre(s) composé(s) organique(s) est(sont) choisi(s) parmi les alcools, les cétones, les éthers d'alkylènes glycols et les esters de ceux-ci, le diméthyl formamide, la N-pyrrolidone et tous les composés connus pour leur aptitude à dissocier les espèces ionisables et, éventuellement, leurs propriétés à dissoudre les autres ingrédients de la composition d'encre et/ou à retarder l'évaporation de l'encre ; et leurs mélanges.

5. Composition selon la revendication 4, dans laquelle ledit ou lesdits autre(s) composé(s) est(sont) choisi(s) parmi les alcools aliphatiques linéaires ou ramifiés de 1 à 5 atomes de carbone, les cétones de 3 à 10 atomes de carbone, les éthers monoalkyliques (en C1 à C6) ou dialkyliques (en C1 à C6) d'alkylènes glycol comprenant 1 à 10 atomes de carbone dans la chaîne alkylène, tels que l'éthylène glycol et le propylène glycol, et les esters de ceux-ci avec les acides carboxyliques, aliphatiques saturés de 1 à 6 atomes de carbone.

6. Composition d'encre selon la revendication 1, dans laquelle ledit liant comprend un ou plusieurs résine(s) ou polymère(s).

7. Composition d'encre selon la revendication 6, dans laquelle le ou lesdites résine(s) et/ou polymère(s) est(sont) choisie(s) parmi les résines (méth)acryliques, vinyliques, cétoniques, phénoliques, cellulosiques, styréniques, époxy, les polyuréthanes, les styrène-acrylates, et les combinaisons de deux ou plus de celles-ci.

8. Composition d'encre selon l'une quelconque des revendications 1 à 7, comprenant de 0,1 à 30 % en poids de liant.

9. Composition d'encre selon la revendication 1, comprenant, en outre, un ou plusieurs plastifiant(s) à raison de 0,1 à 20 % en poids.

10. Composition d'encre selon la revendication 1, dans laquelle ledit ou lesdits solvant(s) et/ou pigment(s) est(sont) choisi(s) parmi les colorants et pigments connus sous la dénomination de « C. I. Solvent Dyes » et « C. I. Pigments ».

11. Composition selon l'une quelconque des revendications 1 à 10, comprenant de 0,1 à 20 % en poids de colorant(s) et/ou pigment(s).

12. Composition selon l'une quelconque des revendications 1 à 11, comprenant, en outre, au moins un sel de conductivité à raison de 0,1 à 20 % en poids.

13. Composition d'encre selon la revendication 12, dans laquelle ledit sel de conductivité est choisi parmi les sels de métaux alcalins, alcalino-terreux et d'ammoniums simples ou quaternaires, sous forme d'halogénures, perchlorates, nitrates, thiocyanates, formiates, acétates, sulfates et propionates.

14. Composition d'encre selon la revendication 1, comprenant, en outre, un ou plusieurs additif(s) choisi(s) parmi les agents antimousse, les stabilisants chimiques, les stabilisants UV, les agents tensio-actifs, les agents inhibant la corrosion par les sels ; les bactéricides, fongicides et biocides, et les tampons régulateurs de pH.

15. Procédé de marquage d'objets par projection sur ces objets d'une encre, **caractérisée en ce que** l'encre projetée est une composition d'encre selon l'une quelconque des revendications 1 à 14.

16. Procédé selon la revendication 15, **caractérisé en ce que** le marquage est effectué par la technique du jet continu dévié.

## Patentansprüche

1. Tintenzusammensetzung mit:
einem Bindemittel,
einem oder mehreren Farbmittel(n) und/oder Pigment(en), und
einem Lösemittel,
wobei das Lösemittel mindestens 10 Gew.-% - im Verhältnis zum Gesamtgewicht der Tinte - 1,3-Dioxolan, mindestens 5 Gew.-% an einer oder mehreren anderen organischen Verbindung(en), welche die sich in der Tinte befindlichen.ionisierbaren Spezies dissoziieren können, und mindestens 5% Wasser umfasst.

2. Tintenzusammensetzung nach Anspruch 1 die 10 bis 85 Gew.-% Dioxolan umfasst.

3. Tintenzusammensetzung nach einem der Ansprüche 1 oder 2, die 5 bis 50 Gew.-% der anderen organischen Verbindung(en) umfasst.

4. Tintenzusammensetzung nach einem der Ansprüche 1 bis 3, wobei die andere(n) organische(n) Verbindung(en) aus Alkoholen, Ketonen, Alkylenglykolethern und deren Estern, Dimethylformamid, N-Pyrrolidon und allen Verbindungen, die für ihre Fähigkeit, ionisierbare Spezies zu dissoziieren, und eventuell ihre Eigenschaften, die anderen Bestandteile der Tintenzusammensetzung zu lösen und/oder die Verdampfung der Tinte zu verzögern, bekannt sind, und aus deren Gemischen ausgewählt ist/sind.

5. Zusammensetzung nach Anspruch 4, wobei die andere(n) Verbindung(en) aus linearen oder verzweigten aliphatischen Alkoholen mit 1 bis 5 Kohlenstoffatomen, Ketonen mit 3 bis 10 Kohlenstoffatomen, Alkylenglykol-mono-(C₁-C₆)alkyl-ethern oder -di-(C₁-C₆)alkyl-ethern mit 1 bis 10 Kohlenstoffatomen in der Alkylenkette, wie Ethylenglykol und Propylenglykol, und deren Estern mit gesättigten aliphatischen Carbonsäuren mit 1 bis 6 Kohlenstoffatomen ausgewählt ist/sind.

6. Tintenzusammensetzung nach Anspruch 1, wobei das Bindemittel ein oder mehrere Harz(e) oder Polymer(e) umfasst.

7. Tintenzusammensetzung nach Anspruch 6, wobei das oder die Harz(e) und/oder Polymer(e) aus (Meth)acryl-, Vinyl-Keton-, Phenol-, Cellulose-, Styrol-, Epoxyharzen, Polyurethanen, Styrol-Acrylaten und den Kombinationen aus zwei oder mehreren derselben ausgewählt ist/sind.

8. Tintenzusammensetzung nach einem der Ansprüche 1 bis 7, die 0,1 bis 30 Gew.-% Bindemittel umfasst.

9. Tintenzusammensetzung nach Anspruch 1, die außerdem ein oder mehrere Plastifizierungsmittel in einem Anteil von 0,1 bis 20 Gew.-% umfasst.

10. Tintenzusammensetzung nach Anspruch 1, wobei das oder die Lösemittel und/oder Pigment(e) aus den Farbmitteln und Pigmenten ausgewählt ist/sind, die unter der Bezeichnung "C.I. Solvent Dyes" und "C.I. Pigments" bekannt sind.

11. Zusammensetzung nach einem der Ansprüche 1 bis 10, die 0,1 bis 20 Gew.-% an Farbmittel(n) und/oder Pigment(en) umfasst.

12. Zusammensetzung nach einem der Ansprüche 1 bis 11, die ferner mindestens ein Leitfähigkeitssalz in einem Anteil von 0,1 bis 20 Gew.-% umfasst.

13. Tintenzusammensetzung nach Anspruch 12, wobei das Leitfähigkeitssalz aus Alkalimetall-, Erdalkalimetall- und einfachen oder quaternären Ammoniumsalzen in der Form von Halogeniden, Perchloraten, Nitraten, Thiocyanaten, Formiaten, Acetaten, Sulfaten und Propionaten ausgewählt ist.

14. Tintenzusammensetzung nach Anspruch 1, die ferner einen oder mehrere Zusatzstoffe, die aus Entschäumungsmitteln, chemischen Sterilisierungsmitteln, UV-Stabilisierungsmitteln, grenzflächenaktiven Mitteln, die Korrosion durch Salze hemmenden Mitteln, Bakteriziden, Fungiziden und Bioziden und den pH-Wert regulierenden Puffern ausgewählt sind, umfasst.

15. Verfahren zum Kennzeichnen von Gegenständen durch Aufspritzen einer Tinte auf diese Gegenstände, **dadurch gekennzeichnet, dass** die aufgespritzte Tinte eine Tintenzusammensetzung nach einem der Ansprüche 1 bis 14 ist.

16. Verfahren nach Anspruch 15, **dadurch gekennzeichnet, dass** das Kennzeichnen mit dem Verfahren eines abgelenkten kontinuierlichen Strahls durchgeführt wird.

## Claims

1. Ink composition comprising:
- a binder
- one or several dyes and / or pigments, and
- a solvent
in which the said solvent comprises at least 10 % by weight - in relation to the total weight of the ink - of 1,3-dioxolane, at least 5 % by weight of one or several other organic compounds that can dissociate the ionisable species in the ink, and less than 5 % water.

2. Ink composition according to claim 1, comprising from 10 to 85 % by weight of dioxolane.

3. Ink composition according to either of claims 1 or 2, comprising from 5 to 50 % by weight of the said other organic compounds(s).

4. Ink composition according to any of claims 1 to 3, in which the said other organic compound(s) are chosen from alcohols, ketones, glycol alkylene ethers and esters, dimethyl formamide, N-pyrrolidone and any other compounds known for their ability to dissociate ionisable species and, if appropriate, their, properties of dissolving the other ingredients in the ink composition and / or to slow down the evaporation of the ink; and their mixtures.

5. Ink composition according to claim 4, in which the said other compound(s) are chosen from linear or branched aliphatic alcohols with from 1 to 5 carbon atoms, ketones with from 3 to 10 carbon atoms, monoalkylic ethers (in C1 to C6) or dialkylic (in C1 to C6) glycol akylenes comprising 1 to 10 carbon atoms in the alkylene chain, such as ethylene glycol and propylene glycol, and the esters of these with saturated aliphatic carboxylic acids with 1 to 6 carbon atoms.

6. Ink composition according to claim 1, in which the said binder comprises one or several resins or polymers.

7. Ink composition according to claim 6, in which the said resin(s) and / or polymer(s) are chosen from the methacryric, vinylic, ketonic, phenolic, cellulosic, styrenic, epoxy, polyurethane and styrene - acrylate resins, and the combination of two or more of these.

8. Ink composition according to any of claims 1 to 7, comprising 0.1 to 30 % by weight of binder.

9. Ink composition according to claim 1, comprising, in addition, one or several plastifiers at a level of 0.1 to 20 % by weight.

10. Ink composition according to claim 1, in which the said solvent(s) and / or pigment(s) are chosen from dyes and pigments known as "C. I. Solvent Dyes" and "C. I. Pigments".

11. Ink composition according to any of claims 1 to 10, comprising 0.1 to 20 % by weight of dye(s) and / or pigment(s).

12. Ink composition according to any of claims 1 to 11, comprising, in addition, at least one conductivity salt at a level of 0.1 to 20 % by weight.

13. Ink composition according to claim 12, in which the said conductivity salt is chosen from alkali metal salts, alkaline earth salts and single or quaternary ammonium salts, in the form of halides, perchlorates, nitrates, thiocyanates, formiates, acetates, sulphates and propionates.

14. Ink composition according to claim 1, comprising, in addition, one or several additives chosen from anti-foaming agents, chemical stabilisers, UV stabilisers, surfactants, inhibitors to prevent salt corrosion, bactericides, fungicides, biocides, and pH buffering agents.

15. Process for marking objects by the projection of ink onto these objects, whereby the projected ink is an ink composition according to any.of claims 1 to 14.

16. Process according to claim 15, **characterized in that** marking is achieved by the continuous deflected ink jet technique.
